# EUROPÄISCHE PATENTSCHRIFT

(11) **EP 2 354 637 B1**
(45) Veröffentlichungstag und Bekanntmachung des Hinweises auf die Patenterteilung: **04.03.2020**
(21) Anmeldenummer: 10169058.4
(22) Anmeldetag: 09.07.2010
(51) Int. Cl.: F21V 8/00, F21S 43/249, F21S 43/14, F21S 43/239, F21S 43/243, F21S 43/245, F21Y 115/10, F21Y 105/10

(54) **Beleuchtungsvorrichtung für Fahrzeuge**
Illumination device for vehicles
Dispositif d'éclairage pour véhicules

(30) Priorität: 30.01.2010 DE 102010006344
(43) Veröffentlichungstag der Anmeldung: 10.08.2011
(73) Patentinhaber: HELLA GmbH & Co. KGaA, 59552 Lippstadt (DE)
(72) Erfinder: Mügge, Martin, 59590, Geseke (DE); Schäfer, Heinrich, 33181, Bad Wünnenberg (DE)

(56) Entgegenhaltungen:
- EP-A1- 1 746 339
- DE-A1- 10 143 544
- DE-A1-102006 008 199

## Beschreibung

Die Erfindung betrifft eine Beleuchtungsvorrichtung für Fahrzeuge nach dem Oberbegriff des Patentanspruchs 1.

Aus der DE 10 2006 008 199 A1 ist eine Beleuchtungsvorrichtung für Fahrzeuge mit einer ersten Lichteinheit und einer zweiten Lichteinheit bekannt, wobei die erste Lichteinheit einen ersten Arm und die zweite Lichteinheit einen zu demselben gegenüberliegenden, den ersten Arm geradlinig verlängernden zweiten Arm aufweist. Die beiden Lichteinheiten erstrecken sich somit im Wesentlichen in einer gemeinsamen Ebene. Dies ist ausdrücklich gewünscht, da die Beleuchtungsvorrichtung platzsparend ausgebildet sein soll. Die beiden Lichteinheiten verfügen jeweils über eine Vorderseite und eine Rückseite sowie eine jeweils dieselben verbindende Schmalseite. An der Schmalseite der ersten Lichteinheit erfolgt die Lichtauskopplung zur Seite hin, ohne dass die Flachseiten der ersten Lichteinheit zur Totalreflexion des eingekoppelten Lichtes dienen. Die Schmalseite des zweiten Armes dient zur Totalreflexion des eingekoppelten Lichtes, so dass es an der Vorderseite des Armes ausgekoppelt werden kann. Dies erfolgt unter einem relativ spitzen Winkel zur Seite hin, wie das ausgekoppelte Licht des ersten Armes.

Aus der DE 101 43 544 A1 ist eine Beleuchtungsvorrichtung für Fahrzeuge mit einem bogenförmigen Lichtleitelement bekannt, an dem endseitig des einen Schenkels mehrere Lichtquellen zur Einkopplung des Lichtes vorgesehen sind. Eine Vorderseite des anderen Schenkels dient zur Lichtauskopplung. Der eine Schenkel weist bogenförmige und geradlinige Lichtleitabschnitte auf, damit das eingekoppelte Licht zur lichtauskoppelnden Vorderseite geleitet werden kann. An einer zur Lichteinkopplung gegenüberliegenden Seite ist eine Einformung vorgesehen, so dass aus dem Lichtleiter ein Lichtbündel austreten kann. Die Einformung bewirkt, dass das austretende Lichtbündel wieder in den Lichtleiter eintreten kann und dann unter Totalreflexion weitergeleitet werden kann.

Aus der DE 102 07 694 A1 ist eine Beleuchtungsvorrichtung für Fahrzeuge bekannt, die zum einen eine erste Lichteinheit bestehend aus einem flächigen Lichtleitelement sowie einem Leuchtelement und zum anderen eine zweite Lichteinheit bestehend aus einem Reflektor und einem Leuchtelement aufweist. Das flächige Lichtleitelement ist in Hauptabstrahlrichtung vor der zweiten Lichteinheit angeordnet und deckt diese vollständig ab. An einer Schmalseite des flächigen Lichtleitelements ist eine Reihe von Leuchtdioden als Leuchtelemente angeordnet, so dass das von denselben emittierte Licht an der Schmalseite des flächigen Lichtleitelements eingekoppelt und dann an einer flächigen Vorderseite und an einer zu derselben gegenüberliegenden Rückseite totalreflektiert wird. An der flächigen Rückseite des flächigen Lichtleitelementes sind Auskoppelelemente angeordnet, so dass das eingespeiste Licht in Richtung der Vorderseite des Lichtleitelementes abgelenkt und an derselben ausgekoppelt wird. Das dem Reflektor zugeordnete Leuchtelement ist als eine Glühlampe ausgebildet, die unabhängig von den dem Lichtleitelement zugeordneten Leuchtdioden ein- und abschaltbar ist. Zur Bildung einer gemeinsamen Lichtfunktion können die erste Lichteinheit und die zweite Lichteinheit gleichzeitig betrieben werden. Dadurch, dass die Fläche und/oder die Anzahl der Auskoppelelemente ausgehend von der als Lichteinkoppelfläche dienenden Schmalseite des flächigen Lichtleitelementes kontinuierlich zunimmt, kann über die Fläche des als "Lichtvorhang" wirkenden flächigen Lichtleitelementes eine homogene Lichtabstrahlung erfolgen, die zur Erzeugung beispielsweise einer Schlusslichtfunktion genutzt werden kann.

Aufgabe der vorliegenden Erfindung ist es, eine Beleuchtungsvorrichtung für Fahrzeuge derart weiterzubilden, dass auf platzsparende Weise das stilistische Erscheinungsbild erweitert werden kann, ohne dass die lichttechnischen Anforderungen an die Lichtfunktion geschmälert werden.

Zur Lösung dieser Aufgabe weist die Erfindung die Merkmale des Patentanspruchs 1 auf.

Nach der Erfindung weist eine Beleuchtungsvorrichtung mindestens zwei flächige Lichtleitelemente auf, wobei ein erstes Lichtleitelement zur flächigen Lichtabstrahlung und ein zweites Lichtleitelement ausschließlich zur linienförmigen Lichtabstrahlung dienen. Vorteilhaft kann hierdurch ein variables optisches Erscheinungsbild der Beleuchtungsvorrichtung erzielt werden, wobei die lichttechnischen Vorgaben erfüllt werden. Nach der Erfindung erstreckt sich das erste Lichtleitelement zumindest bereichsweise quer zu dem zweiten Lichtleitelement. Das zweite Lichtleitelement kann bereichsweise in Hauptabstrahlrichtung vor und/oder hinter einer Licht abstrahlenden Vorderseite des ersten Lichtleitelementes angeordnet sein. Während das erste Lichtleitelement im Wesentlichen als ein "Lichtvorhang" ausgeführt ist, der von seiner Vorderseite flächig ein relativ homogenes Lichtbündel abstrahlt, ermöglicht das zweite Lichtleitelement eine relativ lichtstarke linienförmige Lichtabstrahlung. Beispielsweise kann das zweite Lichtleitelement zur Hinterleuchtung eines Teilbereichs des ersten Lichtleitelementes eingesetzt werden.

Nach einer Weiterbildung der Erfindung sind das erste Lichtleitelement und das zweite Lichtleitelement bereichsweise miteinander verbunden, wobei ein erster Abschnitt der Vorderseite des ersten Lichtleitelementes benachbart zu der ersten Flachseite oder der zweiten Flachseite des Lichtleitelementes angeordnet ist. Der Abschnitt der Vorderseite des ersten Lichtleitelementes kann unmittelbar an der ersten Flachseite oder der zweiten Flachseite des zweiten Lichtleitelementes anliegen oder in einem geringen Abstand zu derselben angeordnet sein. Vorteilhaft kann hierdurch das Licht in einem gemeinsamen Einkoppelbereich in das erste Lichtleitelement und das zweite Lichtleitelement eingespeist werden.

Nach einer Weiterbildung der Erfindung weist das zweite Lichtleitelement eine Ausnehmung auf zur Aufnahme eines korrespondierenden Zungenabschnitts des zweiten Lichtleitelementes. Vorteilhaft kann somit das zweite Lichtleitelement das erste Lichtleitelement zumindest bereichsweise durchdringen, so dass mittels dieser separaten Licht leitenden Bauteile platzsparend eine oder mehrere Lichtfunktionen erzeugt werden können. Das erste Lichtleitelement ist quasi als "schwebendes Element" angeordnet, ohne dass ihre Befestigung von außen sichtbar ist.

Nach einer Weiterbildung der Erfindung können das erste Lichtleitelement und das zweite Lichtleitelement einstückig miteinander verbunden sein. Vorteilhaft können hierdurch die beiden Lichtleitelemente in einem Herstellungsschritt vorzugsweise durch Spritzgießen hergestellt werden.

Nach einer Weiterbildung der Erfindung erstrecken sich die Lichteinkoppelfläche des ersten Lichtleitelementes und des zweiten Lichtleitelementes in einer gemeinsamen Ebene. Vorteilhaft können somit die dem ersten Lichtleitelement und dem Lichtleitelement zugeordneten Lichtquellen (LED-Leuchtelemente) auf einer gemeinsamen ebenen Leiterplatte angeordnet sein.

Nach einer Weiterbildung der Erfindung ist einem Fußabschnitt des ersten Lichtleitelementes eine denselben abdeckende Blende zugeordnet, so dass zum einen unerwünschtes Streulicht abgeschirmt und zum anderen eine mögliche Befestigung des ersten Lichtleitelementes an einem Gehäuse der Beleuchtungsvorrichtung verdeckt wird.

Nach einer Weiterbildung der Erfindung wirken Auskoppelelemente des ersten Lichtleitelementes mit einer Schmalseite desselben derart zusammen, dass diese Schmalseite als linienförmige Lichtauskoppelfläche ausgebildet ist, von der Licht in Hauptabstrahlrichtung abgestrahlt wird. Das erste Lichtleitelement kann somit zusätzliche eine linienförmige Leuchtfläche aufweisen, die den Gestaltungsspielraum der Beleuchtungsvorrichtung weiter erhöht.

Nach einer Weiterbildung der Erfindung weist eine Vorderseite des ersten Lichtleitelementes in einem Schenkelbereich der Beleuchtungsvorrichtung eine Umlenkfläche auf, mittels derer das in einen Fußabschnitt des ersten Lichtleitelementes eingekoppelte Licht in Richtung eines quer zu dem zweiten Lichtleitelement verlaufenden Querschabschnitt des ersten Lichtleitelementes umgelenkt wird. Vorteilhaft kann hierdurch eine flächenhafte Lichtauskopplung an dem ersten Lichtleitelement bewirkt werden, wobei der Fußbereich des ersten Lichtleitelementes lichteinkoppelseitig mit dem zweiten Lichtleitelement zusammenläuft, so dass dieselben Leuchtelemente sowohl dem ersten Lichtleitelement als auch dem zweiten Lichtleitelement zugeordnet sind.

Ausführungsbeispiele der Erfindung werden nachfolgend anhand der Zeichnungen näher erläutert.

Es zeigen:
- Fig. 1: eine perspektivische Vorderansicht einer Beleuchtungsvorrichtung mit zwei flächigen Lichtleitelementen nach einer ersten Ausführungsform,
- Fig. 2: eine Rückansicht der Beleuchtungsvorrichtung gemäß Figur 1,
- Fig. 3: eine Seitenansicht der Beleuchtungsvorrichtung gemäß Figur 1,
- Fig. 4: eine perspektivische Vorderansicht einer Beleuchtungsvorrichtung mit zwei flächigen Lichtleitelementen nach einer zweiten Ausführungsform,
- Fig. 5: eine perspektivische Vorderansicht einer Beleuchtungsvorrichtung mit zwei flächigen Lichtleitelementen nach einer dritten Ausführungsform,
- Fig. 6: eine perspektivische Rückansicht der Beleuchtungsvorrichtung gemäß Figur 5,
- Fig. 7: eine Seitenansicht der Beleuchtungsvorrichtung nach Figur 5,
- Fig. 8: eine vergrößerte Seitenansicht der Beleuchtungsvorrichtung gemäß Figur 5 im Bereich des ebenen Lichtleitelementes mit der linienförmigen Lichtauskoppelfläche,
- Fig. 9: eine perspektivische Vorderansicht einer Beleuchtungsvorrichtung nach einer vierten Ausführungsform mit paarweise angeordneten flächigen Lichtleitelementen,
- Fig. 10: eine Rückansicht der Beleuchtungsvorrichtung gemäß Figur 9,
- Fig. 11: eine perspektivische Vorderansicht einer Beleuchtungsvorrichtung nached einer fünften Ausführungsform und
- Fig. 12: eine Rückansicht der Beleuchtungsvorrichtung gemäß Figur 11.

Eine Beleuchtungsvorrichtung für Fahrzeuge ist vorzugsweise als eine Signalleuchte ausgebildet, die in einem Heckbereich des Fahrzeugs angeordnet ist. Sie dient zur Erzeugung einer Schlusslicht-, Bremslicht-, Blinklicht- oder Parklichtfunktion.

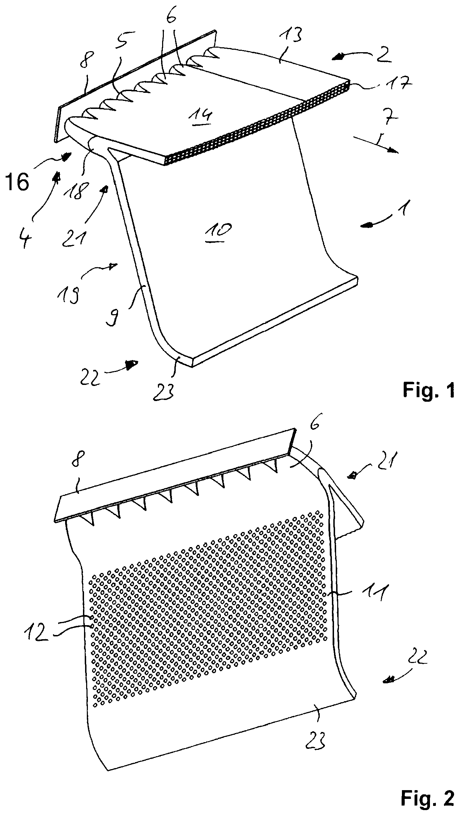

Nach einer ersten Ausführungsform der Beleuchtungsvorrichtung gemäß den Figuren 1 bis 3 sind in einem nicht dargestellten Gehäuse der Beleuchtungsvorrichtung eine erste Lichteinheit 1 und eine zweite Lichteinheit 2 zur Erzeugung einer Schlusslichtfunktion vorgesehen. Den Lichteinheiten 1 und 2 sind eine Reihe von Leuchtelementen (LEDs 3) zugeordnet, die das Licht in einem Einkoppelbereich 4 der Lichteinheiten 1 und 2 in dieselben einkoppeln. Zu diesem Zweck ist eine gemeinsame Lichteinkoppelfläche 5 mit jeweils den Leuchtelementen 3 zugeordneten parabelförmigen Ausbuchtungen 6 vorgesehen, die das eingekoppelte Licht im Wesentlichen in Hauptabstrahlrichtung 7 der Beleuchtungsvorrichtung parallelisieren. Die Leuchtelemente 3 können beispielsweise als LED-Chips ausgebildet sein, die auf einer gemeinsamen Leiterplatte 8 angeordnet sind. Die erste Lichteinheit 1 weist ein flächiges Lichtleitelement 9 auf, das eine flächige in Hauptabstrahlrichtung 7 hinter derselben vorne angeordnete Vorderseite 10 zur Lichtauskopplung und ein in Hauptabstrahlrichtung 7 angeordnete Rückseite 11 auf, an der eine Mehrzahl von Auskoppelelementen 12 angeordnet sind, mittels derer das eingekoppelte Licht in Richtung der Vorderseite 10 totalreflektiert wird, damit es homogen über die Fläche des Lichtleitelementes 9 abgestrahlt wird. Die Auskoppelelemente 12 können kugel- oder torus- oder kegel- oder prismenförmig ausgebildet sein. Alternativ können die Auskoppelelemente 12 auch durch Bedruckung oder als Erodier- bzw. Ätzstruktur ausgebildet sein. Der im Wesentlichen parallele Verlauf der Vorderseite 10 und der Rückseite 11 sowie die Auskoppelelemente 12 bewirken, dass ein flächiges Lichtbündel L_{F} abgestrahlt wird.

Die zweite Lichteinheit 2 weist ein weiteres flächiges Lichtleitelement 13 mit einer ersten vorzugsweise oberen Flachseite 14 und einer zweiten vorzugsweise unteren Flachseite 15 auf, die wie die Vorderseite 10 bzw. Rückseite 11 des ersten Lichtleitelementes 9 zur Totalreflexion des eingekoppelten Lichtes dienen.

Während im Einkoppelbereich 4 eine ersten Schmalseite 5 des ersten Lichtleitelementes 9 und des zweiten Lichtleitelementes 13 zur Einkopplung des Lichtes in dieselben dient, ist auf einer gegenüberliegenden Seite des zweiten Lichtleitelementes 13 eine zweite Schmalseite 17 als linienförmige Lichtauskoppelfläche ausgebildet. Von der linienförmigen Lichtauskoppelfläche 17 wird ein linienförmiges Lichtbündel L_{L} in Hauptabstrahlrichtung 7 abgestrahlt, dessen Leuchtdichte größer ist als die des ersten Lichtleitelementes 9.

Das erste Lichtleitelement 9 und das zweite Lichtleitelement 13 sind einstückig miteinander verbunden, wobei ein Fußabschnitt 18 des ersten Lichtleitelementes 9 zusammen mit einem hinteren Abschnitt des zweiten Lichtleitelementes 13 in Richtung der Leiterplatte 8 verläuft. Damit ein Teillichtbündel des eingekoppelten Lichtes, hier ein unteres Teillichtbündel, in Richtung eines durch die Vorderseite 10 und die Rückseite 11 gebildeten und im Wesentlichen quer zum zweiten Lichtleitelement 13 verlaufenden Lichtauskoppelabschnitt 19 des ersten Lichtleitelementes 9 umgelenkt wird, ist eine vorzugsweise eben ausgebildete Umlenkfläche 20 in einem Schenkelbereich 21 zwischen dem ersten Lichtleitelement 9 und dem zweiten Lichtleitelement 13 angeordnet. Alternativ kann diese Umlenkfläche 20 auch einen gekrümmten Verlauf, beispielsweise eine kreis- oder parabelförmige Kontur, aufweisen. Alternativ kann sie auch eine prismenartige Struktur mit mehreren treppenförmigen Prismenstufen zur Lichtumlenkung aufweisen. Das so umgelenkte Licht wird im Wesentlichen nach Totalreflexion an der Vorderseite 10 des ersten Lichtleitelementes 9 abgestrahlt. Das erste Lichtleitelement 9 dient somit als ein "Lichtvorhang", der ein vorzugsweise homogenes flächiges Lichtbündel L_{F} abstrahlt.

Ein freier Endbereich 22 des ersten Lichtleitelementes 9, der vorzugsweise auf einer dem zweiten Lichtleitelement 13 abgewandten Seite angeordnet ist, weist einen bogenförmigen Fortsatz 23 auf, so dass eine vordere zweite Schmalseite 24 des ersten Lichtleitelementes 9 zur Auskopplung eines linienförmigen Lichtbündels L_{L}'. Durch Anordnung bzw. Ausbildung der Auskoppelelemente 12 und dieses bogenförmigen Fortsatzes 23 wird somit randseitig an dem ersten Lichtleitelement 9 - wie an dem zweiten Lichtleitelement 13 - ein leuchtender Streifen erzeugt, der den lichttechnischen Wirkungsgrad der Beleuchtungsvorrichtung weiter erhöht.

Wenn die vorzugsweise transparent und glasklar ausgebildeten Lichtleitelemente 9, 13 Licht roter Lichtfarbe eingekoppelt wird, kann beispielsweise eine Schlusslichtsignalfunktion erzeugt werden, wobei das durch die Vorderseite 10 des ersten Lichtleitelementes 9 abgegebenes flächige Lichtbündel L_{F} eine Konturierung oben und unten durch die linienförmigen Lichtbündel L_{L} und L_{L}' erfährt. Hierdurch kann das Erscheinungsbild der Signalfunktion in Abhängigkeit von Designanforderungen variiert werden, wobei stets die gesetzlichen Anforderungen erfüllt sind. Alternativ können die linienförmigen Auskoppelflächen 17 und/oder 24 auch eine andere Kontur aufweisen, beispielsweise wellenförmig oder zickzackförmig.

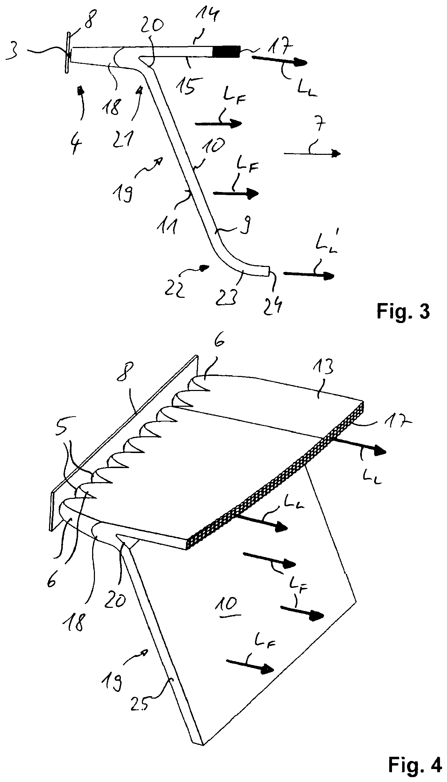

Nach einer zweiten Ausführungsform der Erfindung gemäß der Figur 4 ist im Unterschied zu der ersten Ausführungsform ein erstes Lichtleitelement 25 vorgesehen, das über keinen bogenförmigen Fortsatz 23 verfügt. Als linienförmige Lichtauskoppelfläche dient lediglich die Lichtauskoppelfläche 17 des zweiten Lichtleitelementes 13.

Gleiche Bauteile bzw. Bauteilfunktionen der Ausführungsbeispiele sind mit den gleichen Bezugsziffern versehen.

Falls von dem ersten Lichtleitelement 25 im freien Endbereich 22 doch eine linienförmige Lichtauskoppelfläche gebildet sein sollte, kann dies durch Erzeugung einer Abschrägung der zweiten Schmalseite 26 erfolgen, die beispielsweise einen Winkel von 45° zur Vertikalen einnimmt.

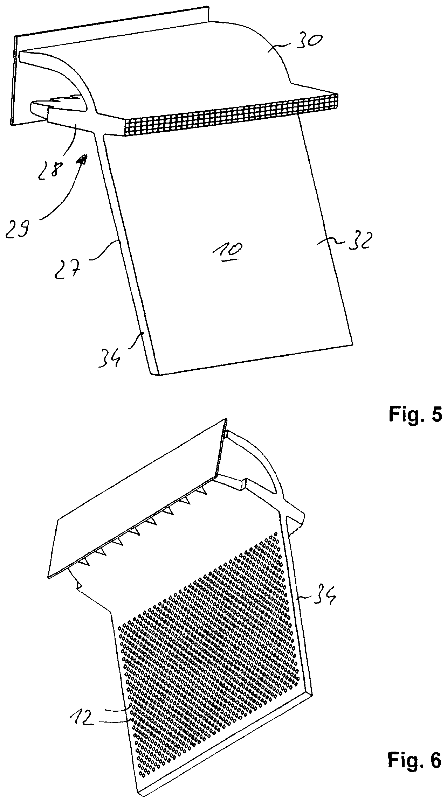

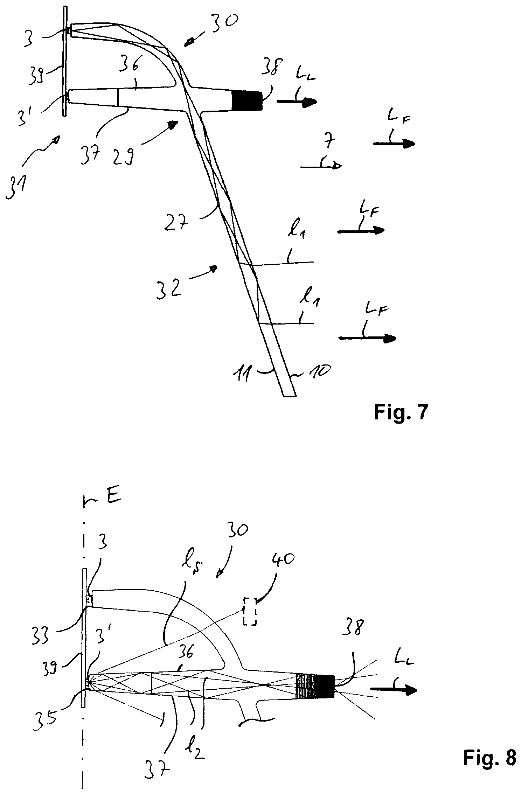

Nach einer dritten Ausführungsform der Beleuchtungsvorrichtung gemäß den Figuren 5 bis 8 ist ein erstes flächiges Lichtleitelement 27 und ein zweites flächiges Lichtleitelement 28 vorgesehen, die einstückig miteinander verbunden sind und sich in einem Kreuzungsbereich 29 kreuzen. Das erste Lichtleitelement 27 weist einen bogenförmigen Fußabschnitt 30 auf, der sich im Wesentlichen von einem Lichteinkoppelbereich 31 unter Bildung eines spitzen Winkels oder rechten Winkels zu dem Kreuzungsbereich 29 erstreckt, von dem aus sich ein Lichtauskoppelabschnitt 32 im Wesentlichen quer zu dem zweiten Lichtleitelement 28 nach unten verläuft. Der Lichtauskoppelabschnitt 32 ist relativ großflächig ausgebildet und weist die Vorderseite 10 und die Rückseite 11 auf zur flächigen Lichtauskopplung in Hauptabstrahlrichtung 7. In Figur 7 sind beispielhaft Lichtstrahlen l₁ eingezeichnet, die verdeutlichen, dass im Wesentlichen vom Lichtauskoppelabschnitt 32 des ersten Lichtleitelementes 27 das flächige Lichtbündel L_{F} abgestrahlt wird.

An einem hinteren freien Ende des bogenförmigen Fußabschnitts 30 ist eine erste Schmalseite 33 als Lichteinkoppelfläche ausgebildet, der eine Reihe von Leuchtelementen 3 zugeordnet ist. Bei rot abstrahlenden Leuchtelementen 3 kann das erste Lichtleitelement 27 beispielsweise zur Erzeugung einer Schlusslichtfunktion dienen.

Seitliche Schmalseiten 34 des ersten Lichtleitelementes 27 dienen im Wesentlichen nicht zur Lichtauskopplung; können bei entsprechender Formgebung auch zur Erzeugung einer Seitenmarkierungslichtfunktion dienen.

Das zweite Lichtleitelement 28 ist im Wesentlichen eben ausgebildet, wobei es im Kreuzungsbereich 29 eine größere Dicke aufweist als im übrigen Bereich. Wie aus Figur 8 zu ersehen ist, ist eine erste Schmalseite 35 des zweiten Lichtleitelementes 28 als Lichteinkoppelfläche ausgebildet und einer Reihe von Leuchtelementen 3' zugeordnet. In Figur 8 ist exemplarisch ein Lichtstrahl l₂ dargestellt, der an einer oberen ersten Flachseite 36 und unteren zweiten Flachseite 37 totalreflektiert wird, bis er an einer vorderen zweiten Schmalseite 38, die als linienförmige Lichtauskoppelfläche ausgebildet ist, ausgekoppelt wird zur Bildung des linienförmigen Lichtbündels L_{L}. Handelt es sich bei den Leuchtelementen 3' um rote Lichtfarbe abstrahlende Leuchtelemente, kann das zweite Lichtleitelement 28 zur Erzeugung einer Bremslichtfunktion eingesetzt werden.

Es ist ersichtlich, dass die Leuchtelemente 3, 3" auf einer gemeinsamen Leiterplatte 39 angeordnet sind, die sich in einer vertikalen Ebene E erstreckt. Der Lichtauskoppelabschnitt 32 des ersten Lichtleitelements 27 erstreckt sich in einem spitzen Winkel zu der Erstreckungsebene E und ist dabei leicht geneigt nach unten verlaufend ausgebildet.

Damit ein unerwünschtes Streulicht l_{S} nicht in die Umgebung abgestrahlt wird, kann nach einer alternativen Ausführungsform dem bogenförmigen Fußabschnitt 30 in Hauptabstrahlrichtung 7 eine Blende 40 vorgelagert sein, siehe gestrichelte Linie in Figur 8. Darüber hinaus kann die Blende 40 zur Abdeckung einer nicht dargestellten Befestigung des ersten und zweiten Lichtleitelementes 27, 28 an dem Gehäuse dienen.

Wenn die Leuchtelemente 3' Licht gelber Lichtfarbe abstrahlen, kann das zweite Lichtleitelement 28 auch zur Erzeugung einer Blinklichtfunktion dienen. Hierbei werden die Leuchtelemente 3, 3' vorzugsweise separat angesteuert, so dass auf eine aufwändige Taktung der Lichtfunktion verzichtet werden kann. Auch können die LEDs 3' als mehrfarbige, beispielsweise rot-gelb-farbene LEDs ausgeführt sein, so dass das zweite Lichtleitelement 28 in Abhängigkeit von der Ansteuerung entweder zur Erzeugung einer Schlusslichtfunktion oder zur Erzeugung einer Blinklichtfunktion dient. Das erste Lichtleitelement 27 wird vorzugsweise hierbei zur Erzeugung einer Schlusslichtfunktion eingesetzt.

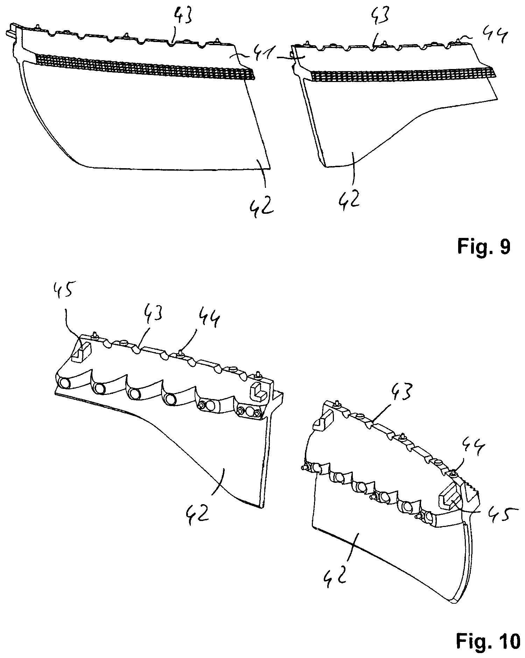

Nach einer weiteren Ausführungsform der Beleuchtungsvorrichtung gemäß den Figuren 9 und 10 kann im Unterschied zu dem vorhergehenden Ausführungsbeispiel gemäß den Figuren 5 bis 8 ein Fußabschnitt 41 des ersten Lichtleitelementes 42 auch geradlinig bzw. eben ausgebildet sein. Das dem ersten Lichtleitelement 42 zugeordnete Licht wird dann vertikal von oben in die erste Schmalseite 43 des ersten Lichtleitelementes 42 eingekoppelt. Hierbei kann der Fußabschnitt 41 zusätzlich vorderseitig zur Lichtauskopplung dienen. Ferner ist aus den Figuren 9 und 10 ersichtlich, dass das erste Lichtleitelement 42 an der oberen Schmalseite 43 Befestigungsdome 44 und Befestigungswinkel 45 aufweisen kann zur Befestigung an dem nicht dargestellten Gehäuse.

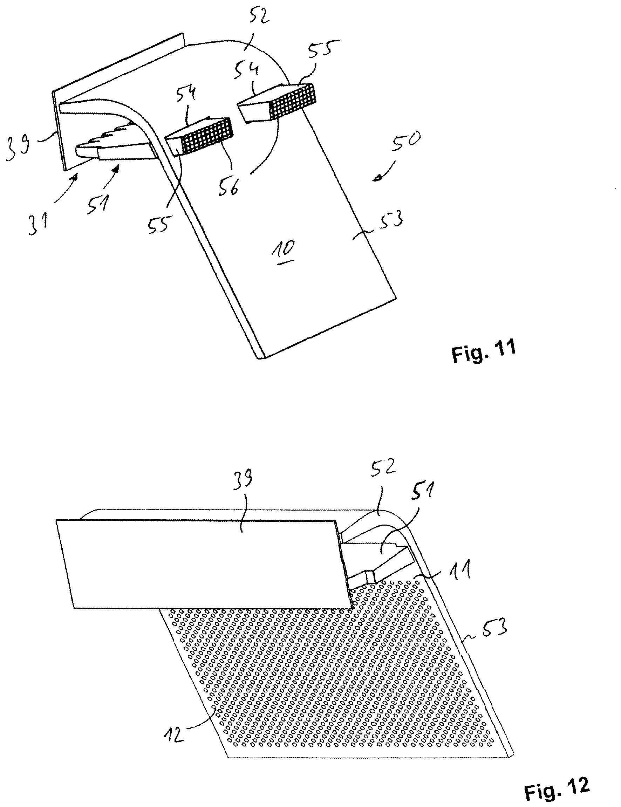

Nach einer weiteren Ausführungsform der Beleuchtungsvorrichtung gemäß den Figuren 11 und 12 sind ein erstes Lichtleitelement 50 und ein zweites Lichtleitelement 51 vorgesehen, die als separate Bauteile ausgeführt sind. Das erste Lichtleitelement 50 weist in einem Übergangsbereich zwischen einem Fußabschnitt 52 und einem Lichtauskoppelabschnitt 53 desselben zwei Ausnehmungen 54 auf, durch die ein korrespondierender Zungenabschnitt 55 des zweiten Lichtleitelementes 51 steckbar ist. Die beiden Zungenabschnitte 55 weisen endseitig die Lichtauskoppelfläche 56 des zweiten Lichtleitelementes 51 auf zur Erzeugung von zwei linienförmigen Leuchtflächen. Zwischen den Zungenabschnitten 55 ist ein nicht dargestellter Anlageabschnitt vorgesehen, der an der Rückseite 11 des Lichtauskoppelabschnitts 53 anliegt. Dieser Zwischenabschnitt dient zur Hinterleuchtung des ersten Lichtleitelementes 50.

Alternativ kann dieser Zwischenbereich auch in einem Abstand zu der Rückseite 11 des ersten Lichtleitelementes 50 angeordnet sein. Es kann somit ein unterschiedliches Lichtmuster erzeugt werden.

Das zweite Lichtleitelement 51 ist auf einer dem Lichteinkoppelbereich 31 zugewandten Seite übereinstimmend mit der Ausführungsform gemäß den Figuren 5 bis 8 ausgebildet. Das erste Lichtleitelement 50 ist im Bereich des Lichtauskoppelabschnitts 53 sowie im Bereich des Lichteinkoppelbereichs 31 gleich mit dem Lichtleitelement 27 der Ausführungsform gemäß den Figuren 5 bis 8 ausgebildet.

Die in den vorgenannten Ausführungsbeispielen aufgeführten Merkmale sind auch in Kombination zwischen den Ausführungsbeispielen verwendbar. Die gezeigten und beschriebenen Ausführungsformen sind nicht als abschließende Aufzählung zu verstehen, sondern haben vielmehr beispielhaften Charakter für die Darstellung der Erfindung. Ein Gesichtspunkt der Erfindung ist es, dass das erste Lichtleitelement als Lichtvorhang mit einem linienförmig abstrahlenden Lichtleitelement kombiniert wird, wobei das erste Lichtleitelement als "schwebendes Element" ohne sichtbare Befestigung ausgeführt ist.

Alternativ kann die erste Lichteinheit 1 und/oder die zweite Lichteinheit 2 eine Lichteinkoppelfläche aufweisen, deren optische Fläche als Linse oder Reflexionsfläche ausgebildet ist.

Alternativ kann die linienförmige Lichtauskoppelfläche 17 der zweiten Lichteinheit 2 optische Streumittel zur Generierung einer Lichtverteilung aufweisen, wobei die Streumittel als optische Flächen oder als eine lichtstreuende Strukturierung ausgeführt ist.

Vorzugsweise kann die erste Lichteinheit 1 und/oder die zweite Lichteinheit 2 mittels eines zweifachen Spritzvorgangs hergestellt werden, wobei zuerst eine glasklare Komponente und zum zweiten eine farbige Komponente eingespritzt werden oder umgekehrt.

**Bezugszeichenliste**

| | | | |
|---|---|---|---|
| 1 | erste Lichteinheit | 32 | Lichteinkoppelbereich |
| 2 | zweite Lichteinheit | 33 | erste Schmalseite |
| 3 | Leuchtelemente (LEDs) | 34 | seitliche Schmalseiten |
| 4 | Einkoppelbereich | 35 | erste Schmalseite |
| 5 | Lichteinkoppelfläche | 36 | obere Flachseite |
| 6 | Ausbuchtungen | 37 | untere Flachseite |
| 7 | Hauptabstrahlrichtung | 38 | zweite Schmalseite |
| 8 | Leiterplatte | 39 | Leiterplatte |
| 9 | flächiges Lichtleitelement | 40 | Blende |
| 10 | Vorderseite | 41 | Fußabschnitt |
| 11 | Rückseite | 42 | erstes Lichtleitelement |
| 12 | Auskoppelelemente | 43 | erste Schmalseite |
| 13 | flächiges Lichtleitelement | 44 | Befestigungsdome |
| 14 | erste Flachseite | 45 | Befestigungswinkel |
| 15 | zweite Flachseite | | |
| 17 | zweite Schmalseite | 50 | erstes Lichtleitelement |
| 18 | Fußabschnitt | 51 | zweites Lichtleitelement |
| 19 | Lichtauskoppelabschnitt | 52 | Fußabschnitt |
| 20 | Umlenkfläche | 53 | Lichtauskoppelabschnitt |
| 21 | Schenkelbereich | 54 | Ausnehmung |
| 22 | freier Endbereich | 55 | Zungenabschnitt |
| 23 | bogenförmiger Fortsatz | 56 | Lichtauskoppelfläche |
| 24 | zweite Schmalseite | | |
| 25 | erstes Lichtleitelement | | |
| 26 | zweite Schmalseite | L_{F} | flächiges Lichtbündel |
| 27 | erstes Lichtleitelement | L_{L} | linienförmiges Lichtbündel |
| 28 | zweites Lichtleitelement | l₁, l₂ | Lichtstrahlen |
| 29 | Kreuzungsbereich | l_{S} | Streulicht |
| 30 | bogenf. Fußabschnitt | E | vertikale Ebene |
| 31 | Lichteinkoppelbereich | | |

## Patentansprüche

1. Beleuchtungsvorrichtung für Fahrzeuge mit einem Gehäuse, in dem eine erste Lichteinheit (1) und mindestens eine zweite Lichteinheit (2) angeordnet sind, wobei die erste Lichteinheit (1) ein flächiges Lichtleitelement (9, 25, 27, 42, 50) aufweist mit einer Rückseite (11), mit einer Vorderseite (10) und mit einer die Rückseite (11) mit der Vorderseite (10) verbindenden Schmalseite, der als Lichteinkoppelfläche mindestens ein Leuchtelement zugeordnet ist zum Einkoppeln des Lichtes in das flächige Lichtleitelement (9, 25, 27, 42, 50), und dass die Rückseite (11) und/oder die Vorderseite (10) des flächigen Lichtleitelementes (9, 25, 27, 42, 50) mit einer Anzahl von Auskoppelelementen (12) versehen ist, so dass von der Vorderseite (10) des flächigen Lichtleitelementes (9, 25, 27, 42, 50) ein Lichtbündel vorgegebener Lichtstärkeverteilung ausgekoppelt wird zur flächigen Lichtabstrahlung, wobei die zweite Lichteinheit (2) ein flächiges Lichtleitelement (13, 28, 51) aufweist mit einer als Lichteinkoppelfläche ausgebildeten ersten Schmalseite (16), mit einer sich an die erste Schmalseite (16) anschließenden ersten Flachseite (14) und einer zu dieser gegenüberliegenden zweiten Flachseite (15) und mit zumindest einer die erste Flachseite (14) und die zweite Flachseite (15) verbindende zweite Schmalseite (17), die als linienförmige Lichtauskoppelfläche ausgebildet ist, **dadurch gekennzeichnet, dass** die erste Flachseite (14) und die zweite Flachseite (15) der zweiten Lichteinheit (2) zur Totalreflexion des eingekoppelten Lichtes dienen, dass die zweite Lichteinheit (2) mit der ersten Lichteinheit (1) verbunden ist und dass sich das flächige Lichtleitelement (9, 25, 27, 42, 50) der ersten Lichteinheit (1) als erstes Lichtleitelement (9, 25, 27, 42, 50) bereichsweise quer in einem spitzen Winkel oder in einem rechten Winkel zu dem als zweites Lichtleitelement ausgeführten flächigen Lichtleitelement (13, 28, 51) der zweiten Lichteinheit (2) erstreckt, wobei die Vorderseite (10) und/oder die Rückseite (11) des ersten Lichtleitelementes (9, 25, 27, 42, 50) von der ersten Flachseite (14) und/oder zweiten Flachseite (15) des zweiten Lichtleitelementes (13, 28, 51) abragt.

2. Beleuchtungsvorrichtung nach Anspruch 1, **dadurch gekennzeichnet, dass** das erste Lichtleitelement (9, 25, 27, 42, 50) und das zweite Lichtleitelement (13, 28, 51) in einem Kreuzungsbereich (29) miteinander verbunden sind, wobei das in das erste Lichtleitelement (9, 25, 27, 42, 50) eingekoppelte Licht das in das zweite Lichtleitelement (13, 28, 51) eingekoppelte Licht durchkreuzt.

3. Beleuchtungsvorrichtung nach Anspruch 1 oder 2, **dadurch gekennzeichnet, dass** das erste Lichtleitelement (50) in einem Fußabschnitt (52) und/oder in einem Lichtauskoppelabschnitt (53) eine Ausnehmung (54) aufweist, durch die ein Zungenabschnitt (55) des zweiten Lichtleitelementes (51) steckbar ist, wobei der Zungenabschnitt (55) endseitig die Lichtauskoppelfläche (56) des zweiten Lichtleitelementes (51) zur Erzeugung der linienförmigen Leuchtfläche aufweist.

4. Beleuchtungsvorrichtung nach einem der Ansprüche 1 bis 3, **dadurch gekennzeichnet, dass** das erste Lichtleitelement (9, 25, 27, 42) und das zweite Lichtleitelement (13, 28) einstückig miteinander verbunden sind.

5. Beleuchtungsvorrichtung nach Anspruch 3 oder 4, **dadurch gekennzeichnet, dass** sich die Lichteinkoppelfläche (5) des ersten Lichtleitelementes (9, 25, 27, 42, 50) und die Lichteinkoppelfläche (16) des zweiten Lichtleitelementes (13, 28, 51) in einer gemeinsamen Ebene (E) erstreckt und dass sich zwischen der Ebene (E) und dem Kreuzungsbereich (29) des ersten Lichtleitelementes (27, 42, 50) und dem zweiten Lichtleitelement (28, 51) ein vorzugsweise bogenförmiger Fußabschnitt (30) des ersten Lichtleitelementes (27, 42, 50) bis zum Kreuzungsbereich (29) erstreckt.

6. Beleuchtungsvorrichtung nach Anspruch 5, **dadurch gekennzeichnet, dass** der Fußabschnitt (30) des ersten Lichtleitelementes (27) durch eine Blende (40) zumindest teilweise abgedeckt ist.

7. Beleuchtungsvorrichtung nach einem der Ansprüche 1 bis 6, **dadurch gekennzeichnet, dass** die Rückseite (11) des ersten flächigen Lichtleitelementes (9, 25, 27, 42, 50) mit einer Anzahl von Auskoppelelementen (12) versehen ist, derart, dass von der Vorderseite (10) des ersten Lichtleitelementes (9, 25, 27, 42, 50) ein Lichtbündel (L_{F}) vorgegebener Lichtstärkeverteilung abstrahlbar ist.

8. Beleuchtungsvorrichtung nach einem der Ansprüche 1 bis 7, **dadurch gekennzeichnet, dass** eine Schmalseite (24, 26) des ersten Lichtleitelementes (9, 25) derart orientiert und dass die Auskoppelelemente (12) derart verteilt an der Rückseite (11) des ersten flächigen Lichtleitelementes (9, 25) angeordnet sind, dass die Schmalseite (24, 26) des ersten Lichtleitelementes (9) eine linienförmige Lichtauskoppelfläche bildet.

9. Beleuchtungsvorrichtung nach einem der Ansprüche 1 bis 8, **dadurch gekennzeichnet, dass** die Vorderseite (10) des einstückig mit dem zweiten Lichtleitelement (13) verbundenen ersten Lichtleitelementes (9) in einem Schenkelbereich (21) eine Umlenkfläche (20) aufweist zur Umlenkung des eingekoppelten Lichtes von dem Fußabschnitt (18) des ersten Lichtleitelementes (9, 25) zu dem Lichtauskoppelabschnitt (19) desselben.

10. Beleuchtungsvorrichtung nach einem der Ansprüche 1 bis 9, **dadurch gekennzeichnet, dass** die erste Lichteinheit (1) und/oder die zweite Lichteinheit (2) eine optische Fläche zur Lichteinkopplung aufweist, die als Linse oder Reflexionsfläche ausgebildet ist.

11. Beleuchtungsvorrichtung nach einem der Ansprüche 1 bis 10, **dadurch gekennzeichnet, dass** die linienförmigen Lichtauskoppelfläche (17) der zweiten Lichteinheit (2) optische Streumittel zur Generierung einer Lichtverteilung aufweist, wobei die Streumittel als optische Flächen oder als eine lichtstreuende Strukturierung ausgeführt sind.

12. Beleuchtungsvorrichtung nach einem der Ansprüche 1 bis 11, **dadurch gekennzeichnet, dass** die erste Lichteinheit (1) und/oder die zweite Lichteinheit (2) in einem zweifachen Spritzvorgang herstellbar sind, wobei eine erste Einspritzung als glasklare Komponente und eine zweite Einspritzung als farbige Komponente ausgeführt sind.

## Claims

1. Illuminating device for vehicles with a housing in which a first lighting unit (1) and at least a second lighting unit (2) are arranged, where the first lighting unit (1) features a flat light guide element (9, 25, 27, 42, 50) with a rear side (11), with a front side (10) and a narrow side connecting the reverse side (11) with the front side (10) that, acting as a light incoupling surface, has at least one illuminating element assigned to it for incoupling the light into the flat light guide element (9, 25, 27, 42, 50), and that the rear side (11) and/or the front side (10) of the flat light guide element (9, 25, 27, 42, 50) is provided with a number of outcoupling elements (12) in such a way that a light beam of specified luminous intensity distribution is outcoupled from the front side (10) of the flat light guide element (9, 25, 27, 42, 50) for the purpose of flat light radiation,
**where**
the second
lighting unit (2) features a flat light guide element (13, 28, 51) with a first narrow side (16) in the form of a light incoupling surface with a first flat side (14) adjoining the first narrow side (16) and a second flat side (15) opposite the first and with at least one second narrow side (17) joining the first flat side (14) and the second flat side (15) taking the form of a linear light outcoupling surface, **characterized in that,**
the first flat side (14) and the
second flat side (15) of the second lighting unit (2) serve the purpose of total reflection of the incoupled light and **in that** the second lighting unit (2) is connected with the first lighting unit (1) and **in that** the flat light guide element (9, 25, 27, 42, 50) of the first lighting unit (1) as first light guide element (9, 25, 27, 42, 50) extends in some areas at an acute angle or at a right angle to the flat light guide element (13, 28, 51) in the form of second light guide element of the second lighting unit (2), where the front side (10) and/or the rear side (11) of the first light guide element (9, 25, 27, 42, 50) extends from the first flat side (14) and/or second flat side (15) of the second light guide element (13, 28, 51).

2. Illuminating device in accordance with Claim 1, **characterized in that** the first light guide element (9, 25, 27, 42, 50) and the second light guide element (13, 28, 51) are connected with each other in a intersecting area (29), where the light incoupled into the first light guide element (9, 25, 27, 42, 50) crosses through the light incoupled into the second light guide element (13, 28, 51).

3. Illuminating device in accordance with Claim 1 or 2, **characterized in that** the first light guide element (50) features a recess (54) in a footer area (52) and/or in a light outcoupling section (53), a recess through which a tongue section (55) of the second light guide element (51) can be inserted, where the end of the tongue section (55) features the light outcoupling surface (56) of the second light guide element (51) for the purpose of generating the linear illuminated surface.

4. Illuminating device in accordance with one of Claims 1 through 3, **characterized in that** the first light guide element (9, 25, 27, 42) and the second light guide element (13, 28) are connected with each other as one piece.

5. Illuminating device in accordance with Claim 3 or 4, **characterized in that** the light incoupling surface (5) of the first light guide element (9, 25, 27, 42, 50) and the light incoupling surface (16) of the second light guide element (13, 28, 51) extend on a common plane (E) and **in that** a preferentially arched footer section (30) of the first light guide element (27, 42, 50) extends between the plane (E) and the intersection (29) of the first light guide element (27, 42, 50) and the second light guide element (28, 51) up to the intersection (29).

6. Illuminating device in accordance with Claim 5, **characterized in that** the footer section (30) of the first light guide element (27) is at least partially covered by a screen (40).

7. Illuminating device in accordance with one of Claims 1 through 6 **characterized in that** the rear side (11) of the first flat light guide element (9, 25, 27, 42, 50) is provided with a number of outcoupling elements (12) in such a way that a light beam (LF) of a specified luminous intensity can be projected from the front side (10) of the first light guide element (9, 25, 27, 42, 50).

8. Illuminating device in accordance with one of Claims 1 through 7, **characterized in that** one narrow side (24, 26) of the first light guide element (9, 25) is oriented in such a way and **in that** the outcoupling elements (12) are distributed in such a way on the rear side (11) of the first flat light guide element (9, 25) that the narrow side (24, 26) of the first light guide element (9) forms a linear light outcoupling surface.

9. Illuminating device in accordance with one of Claims 1 through 8, **characterized in that** the front side (10) of the first light guide element (9) connected as one piece with the second light guide element (13) features a deflection surface (20) in a leg area (21) for the purpose of deflecting the incoupled light from the footer section (18) of the first light guide element (9, 25) to the light outcoupling section (19).

10. Illuminating device in accordance with one of Claims 1 through 9, **characterized in that** the first lighting unit (1) and/or the second lighting unit (2) features an optical surface for the purpose of light incoupling that takes the form of a lens or a reflection surface.

11. Illuminating device in accordance with one of Claims 1 through 10 **characterized in that** the linear light outcoupling (17) of the second lighting unit (2) features an optical means of diffusion for generating a light diffusion, where the means of diffusion takes the form of optical surfaces or as a light diffusion structure.

12. Illuminating device in accordance with one of Claims 1 through 11, **characterized in that** the first lighting unit (1) and/or the second lighting unit (2) can be manufactured in a two-shot molding procedure, where the first injection takes the form of a transparent component and the second injection takes the form of a colored component.

## Revendications

1. Dispositif d'éclairage pour véhicules avec un boîtier qui contient une première unité lumineuse (1) et au moins une deuxième unité lumineuse (2), avec la première unité lumineuse (1) présentant un élément conducteur de lumière à plat (9, 25, 27, 42, 50) avec une face arrière (11), avec une face avant (10) et avec un côté étroit qui relie la face arrière (11) avec la face avant (10), et qui est associée à au moins un élément lumineux en tant que surface de couplage lumineux pour coupler la lumière dans l'élément conducteur à plat (9, 25, 27, 42, 50), et pour que la face arrière (11) et/ou la face avant (10) de l'élément conducteur de lumière à plat (9, 25, 27, 42, 50) soient munies d'un nombre d'éléments de découplage (12) de sorte qu'un faisceau lumineux de répartition d'intensité lumineuse prédéfinie soit découplé du rayonnement lumineux à plat depuis la face avant (10) de l'élément conducteur de lumière à plat (9, 25, 27, 42, 50),
**tandis que**
la deuxième unité lumineuse (2) présente un élément conducteur de lumière à plat (13, 28, 51) avec un premier côté étroit (16) formé comme une surface de découplage lumineux, avec un premier côté plat (14) relié au premier côté étroit (16) et un deuxième côté plat (15) placé face à celui-ci, et avec au moins un deuxième côté étroit (17) reliant le premier côté plat (14) et le deuxième côté plat (15), formé comme une surface linéaire de découplage lumineux,
**caractérisé par le fait**
**que** le premier côté plat (14) et le deuxième côté plat (15) de la deuxième unité lumineuse (2) servent à la réflexion totale de la lumière couplée, que la deuxième unité lumineuse (2) est reliée à la première unité lumineuse (1), et que l'élément conducteur de lumière à plat (9, 25, 27, 42, 50) de la première unité lumineuse (1) s'étend en tant que premier élément conducteur de lumière (9, 25, 27, 42, 50), en fonction des zones, en travers, en angle aigu ou en angle droit par rapport au deuxième élément conducteur de lumière à plat (13, 28, 51) de la deuxième unité lumineuse (2), conçu comme deuxième élément conducteur de lumière, tandis que la face avant (10) et/ou la face arrière (11) du premier élément conducteur de lumière (9, 25, 27, 42, 50) dépasse du premier côté plat (14) et/ou du deuxième côté plat (15) du deuxième élément conducteur de lumière (13, 28, 51).

2. Dispositif d'éclairage, selon la revendication 1, **caractérisé par le fait que** le premier élément conducteur de lumière (9, 25, 27, 42, 50) et le deuxième élément conducteur de lumière (13, 28, 51) sont reliés l'un à l'autre au niveau d'une intersection (29), où la lumière couplée dans le premier élément conducteur de lumière (9, 25, 27, 42, 50) croise la lumière couplée dans le deuxième élément conducteur de lumière (13, 28, 51).

3. Dispositif d'éclairage, selon la revendication 1 ou 2, **caractérisé par le fait que** le premier élément conducteur de lumière (50) présente une cavité (54) dans un pied (52) et/ou dans une partie de découplage de la lumière (53), dans laquelle une partie de languette (55) du deuxième élément conducteur de lumière (51) peut être enfichée, et où la partie de languette (55) présente à son extrémité la surface de découplage de la lumière (56) du deuxième élément conducteur de lumière (51) pour générer la surface d'éclairage linéaire

4. Dispositif d'éclairage selon l'une des revendications 1 à 3, **caractérisé par le fait que** le premier élément conducteur de lumière (9, 25, 27, 42) et le deuxième élément conducteur de lumière (13, 28) sont reliés pour ne former qu'une seule pièce.

5. Dispositif d'éclairage selon la revendication 3 ou 4, **caractérisé par le fait que** la surface de découplage de la lumière (5) du premier élément conducteur de lumière (9, 25, 27, 42, 50) et la surface de découplage de la lumière (16) du deuxième élément conducteur de lumière (13, 28, 51) s'étendent sur un plan commun (E), et qu'entre le plan (E) et la zone d'intersection (29) du premier élément conducteur de lumière (27, 42, 50) et du deuxième élément conducteur de lumière (28, 51), un pied (30) du premier élément conducteur de lumière (27, 42, 50), de préférence en forme d'arc, s'étend jusqu'à la zone d'intersection (29).

6. Dispositif d'éclairage selon la revendication 5, **caractérisé par le fait que** le pied (30) du premier élément conducteur de lumière (27) est masqué, au moins en partie, par un cache (40).

7. Dispositif d'éclairage selon l'une des revendications 1 à 6, **caractérisé par le fait que** la face arrière (11) du premier élément conducteur de lumière à plat (9, 25, 27, 42, 50) est équipé d'un nombre d'éléments de découplage (12), de sorte qu'un faisceau lumineux (LF) de répartition d'intensité lumineuse puisse être émis depuis la face avant (10) du premier élément conducteur de lumière (9, 25, 27, 42, 50).

8. Dispositif d'éclairage selon l'une des revendications 1 à 7, **caractérisé par le fait qu'**un côté étroit (24, 26) du premier élément conducteur de lumière (9, 25) est orienté de telle sorte, et que les éléments de découplage (12) sont répartis sur la face arrière (11) du premier élément conducteur de lumière à plat (9, 25) de telle sorte que le côté étroit (24, 26) du premier élément conducteur de lumière (9) forme une surface linéaire de découplage de la lumière.

9. Dispositif d'éclairage selon l'une des revendications 1 à 8, **caractérisé par le fait que** la face avant (10) du premier élément conducteur de lumière (9) relié au deuxième élément conducteur de lumière (13) pour ne former qu'une seule pièce présente une surface de déviation (20) dans une zone de branche (21) pour dévier la lumière couplée du pied (18) du premier élément conducteur de lumière (9, 25) à la section de découplage de la lumière (19) de celui-ci.

10. Dispositif d'éclairage selon l'une des revendications 1 à 9, **caractérisé par le fait que** la première unité lumineuse (1) et/ou la deuxième unité lumineuse (2) présentent une surface optique pour le couplage de la lumière, formée comme une lentille ou une surface de réflexion.

11. Dispositif d'éclairage selon l'une des revendications 1 à 10, **caractérisé par le fait que** la surface linéaire de découplage de la lumière (17) de la deuxième unité lumineuse (2) présente des moyens de répartition optiques pour générer une répartition de la lumière, lesquels moyens de répartition sont conçus comme des surfaces optiques ou comme une structure de répartition lumineuse.

12. Dispositif d'éclairage selon l'une des revendications 1 à 11, **caractérisé par le fait que** la première unité lumineuse (1) et/ou la deuxième unité lumineuse (2) peuvent être produites par une double opération d'injection, dans lequel une première injection a lieu en tant que composant transparent, et une deuxième en tant que composant coloré.
